Europäisches Patentamt

European Patent Office

Office européen des brevets

(11) Publication number: **0 416 449 A2**

## (12) EUROPEAN PATENT APPLICATION

(21) Application number: 90116527.4

(22) Date of filing: 29.08.90

(51) Int. Cl.5: **F16H 25/22**

(30) Priority: 05.09.89 GB 8919990

(43) Date of publication of application:
**13.03.91 Bulletin 91/11**

(84) Designated Contracting States:
**DE FR GB IT NL**

(71) Applicant: **BRITISH AEROSPACE PUBLIC LIMITED COMPANY**
**11 Strand**
**London WC2N 5JT(GB)**

Applicant: **PGM JOHNSON LIMITED**

Precision House, Queens Road
Nottingham NG2 3BD(GB)

(72) Inventor: **Langley, Neil**
**PGM Johnson Limited, Precision House**
**Queens Road, Nottingham NG2 3BD(GB)**

(74) Representative: **Eastmond, John**
**British Aerospace plc Corporate IPR**
**Department, Headquarters P.O. Box 87**
**Building Q191 Royal Aerospace**
**Establishment**
**Farnborough Hants GU14 6YU(GB)**

(54) **Ball screw mechanism.**

(57) A ball-screw includes a shaft (1) having two separate helical grooves (3,4) of the same pitch and spaced by half that pitch. The nut (2) includes two corresponding grooves and return bores (5) to define two endless recirculating paths for balls disposed between the nut and shaft. This arrangement permits, for a given groove pitch, the minimum length of the nut to be reduced.

FIG. 1

## BALL-SCREW MECHANISM

This invention relates to a ball-screw mechanism and assemblies.

In a conventional ball-screw assembly, a nut body is mounted on a shaft, the shaft having a continuous helical groove on its surface, and the inner surface of the nut having a corresponding groove. Between the nut and shaft are disposed a number of balls that recirculate in an endless path defined by the grooves and a ball transfer bore provided in the nut. Such a known conventional ball-screw assembly is used in many applications to convert linear motion to rotary, and vice versa.

In such a conventional assembly, for the nut to be adequately supported by the balls, the axial length of the recirculating ball path must extend for at least two turn of the helical groove. Thus the minimum length of the nut is dependant on the pitch of the groove. However the length of the nut cannot simply be reduced at will by reducing the pitch of the groove, since of the pitch is reduced the angle that the groove makes to the axis of the shaft is increased, and this increases the frictional resistance to relative rotation of the nut and shaft.

For many applications this problem is not important since the size of the nut is not oritical. In other applications, however, where size and weight of the nut are important factors, the difficulty of providing a small nut that will still run smoothly on the shaft is disadvantageous.

According to the present invention there is provided a ball-screw assembly comprising a shaft, a nut mounted on said shaft for relative rotation, and a plurality of balls disposed between said nut and shaft, characterised in that said shaft is provided with two separate helical grooves, said nut having means for defining in cooperation with said grooves two endless recirculating paths for said balls.

By means of this arrangement it is possible to reduce the length of the ball nut, without increasing the frictional resistance in comparison with a coventional assembly having a single groove.

In a preferred embodiment the grooves on the shaft have the same pitch. It is particularly preferred that the grooves be spaced by a distance of half their pitch, such that a point on one turn of one groove lies half-way between the corresponding points of adjacent turns of the other groove.

Preferably each recirculating ball path is defined by or at least partly helical groove on the interior of said nut and a non-loaded return bore, the two respective return bores being disposed on opposite sides of the nut. If necessary a transfer member may be provided associated with each return bore to ensure reliable transfer of balls from the loaded ball grooves of the shaft and nut to the non-loaded return bores.

An embodiment of the invention will now be described by way of example and with reference to the accompanying drawings; in which:-

Figure 1 shows a ball-screw assembly according to an embodiment of the invention, and

Figure 2 (a) and (b), 3 (a) and (b) and 4 (a) and (b) show individual components of the assembly of Figure 1.

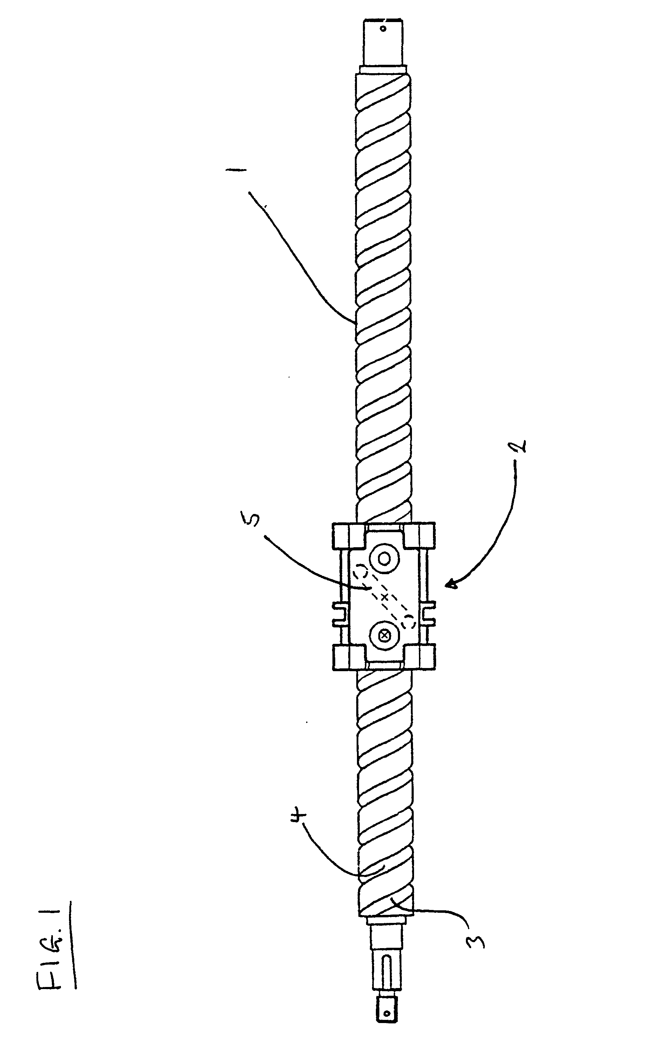

Referring firstly to Figure 1 there is shown a ball-screw assembly including an elongate linear shaft 1 and a ball nut 2. The surface of the shaft 1 is provided with two separate helical grooves 3,4 extending for substantially the entire length of the shaft. Both grooves 3,4 have the same pitch, e.g. 20mm, and are started out of phase with each other, as it were, by approximately 180° so that the two grooves are spaced by half their pitch, i.e. 10mm, such that a point on one turn of one groove lies half-way between the corresponding points of adjacent turn of the other groove.

The nut 2 surrounds the shaft 1 and is provided on its inner surface with grooves (not shown) corresponding to the grooves 3,4 on the, shaft 1. The ends of the grooves on the interior of the nut 2 are connected by respective return bores 5 formed in the nut 2, of which only one is shown in Figure 1, the other being on the opposite side of the nut 2.

Thus the grooves formed on the shaft and nut define, with the return bores, a pair of endless recirculating paths for a plurality of balls that are disposed between the nut 2 and shaft 1 in the grooves 3,4. The balls in the grooves 3,4 bear the load of the nut 2, while those in the return bores 5 are in a non-loaded state.

It will be appreciated that the balls allow relative rotation between the nut and shaft as in a conventional ball nut. In particular if the shaft 1 is held linearly fixed but free to rotate, linear movement of the nut 2 along the shaft 1 will cause the shaft to rotate. Similarly if the nut 2 is held linearly fixed, linear movement of the shaft will cause the nut to rotate. Such conversion of linear to rotary motion, or vice versa, may have a number of application in various technical fields.

Returning to a consideration of the grooves 3,4, the provision of a second groove on the shaft 1 enables a shorter length of the shaft to provide adequate load bearing properties than a conventional shaft having a single groove of the same pitch, e.g. 20mm. Thus the nut 2 can be adequately supported with the axial length of the endless ball paths, i.e. the length in the direction of the shaft 1, being only approximately that of one turn of one groove, i.e. 20mm, and perhaps even slightly less, rather than the two turn that would have been required in the prior art. At the same time, however, the pitch of an individual groove remains only 20mm and thus the frictional resistance created is not significantly increased compared to a known ball-screw having a shaft with a single groove of the same pitch.

Effectively it may be considered that in terms of its load bearing capacity, a double groove shaft, with a corresponding nut, is equivalent to a single groove shaft of half the pitch, whereas its resistance remains only that of a single groove shaft of the same pitch.

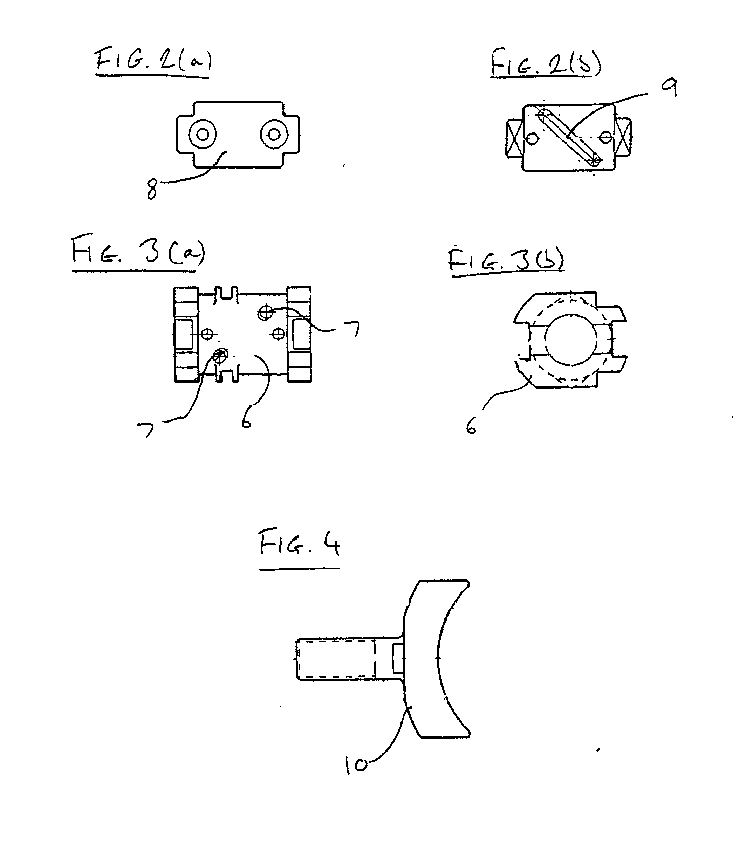

Figures 2 to 4 illustrate individual components of the ball nut 2 of Figure 1. The ball nut 2 comprises a nut body 6 shown in side and end view in Figure 3 (a) and (b) respectively. The nut body 6 includes a pair of openings 7 on each side formed at the ends of an internal groove, not shown. Secured to the sides of the nut body 6 are a pair of transfer caps 8, of which one is shown in external and internal side views respectively in Figures 2 (a) and (b). On the inside of each transfer cap 8 is formed a return groove 9 that links opening 7 when the cap is secured to the body so as to form the return bore 5 (Figure 1).

To aid in the transfer of balls into the return bore 5, a double transfer finger 10 may be provided (Figure 4) as is conventional. It will be appreciated that the scale of Figure 4 is enlarged compared to Figures 1 to 3.

Although the eve description refers to a ball-screw having a two start groove, it will be appreciated that the number of grooves may be increased further, for example to provide three grooves on the shaft and three corresponding grooves on the inside of the nut defining three recirculating paths.

3 wherein each said recirculating path is defined by an at least part helical groove on the interior of said nut and a non-loaded ball return bore (5), said respective return bores (5) being disposed on opposite sides of said nut (2).

5. An assembly according to claim 4 wherein a transfer member (8) is provided associated with each return bore (5) to ensure reliable transfer of balls from the loaded grooves (4) of said shaft (1) and said nut (2) to said non-loaded return bore (5).

## Claims

1. A ball-screw assembly comprising a shaft (1), a nut (2) mounted on said shaft (1) for relative rotation, and a plurality of balls disposed between said nut (2) and said shaft (1), characterised in that said shaft (1) is provided with two separate helical grooves (3, 4), said nut (2) having means for defining in co-operation with said grooves two endless recirculating paths for said balls.

2. An assembly according to claim 1 wherein the grooves (3,4) on said shaft have the same pitch.

3. An assembly according to claim 2 wherein said grooves (3,4) are spaced, in axial direction of said shaft, by a distance corresponding to half their pitch.

4. An assembly according to any of claims 1, 2 and

FIG.1

FIG. 2(a)

FIG. 2(b)

9

8

FIG. 3(a)

7

7

6

FIG. 3(b)

6

FIG. 4

10